# EUROPEAN PATENT APPLICATION

(11) **EP 4 242 632 A1**
(43) Date of publication of application: **13.09.2023**
(21) Application number: 20960730.8
(22) Date of filing: 05.11.2020
(51) Int. Cl.: G01N 17/00, F03D 17/00, F03D 80/50

(54) **ULTRASOUND METHOD FOR MEASURING THE CORROSION OF A METAL STRUCTURE**

(71) Applicant: Asociacion Centro Tecnologico Ceit, 20018 Donostia - San Sebastian (Gipuzkoa) (ES)
(72) Inventor: CORTES VIDAL, Ainhoa, 20018 Donostia (Gipuzkoa) (ES); SEVILLANO BERASATEGUI, Juan Francisco, 20018 Donostia (Gipuzkoa) (ES); IRIZAR PICON, Antonio, 20018 Donostia (Gipuzkoa) (ES); ARIZTI URQUIJO, Fernando, 20018 Donostia (Gipuzkoa) (ES); LOSADA GOBANTES, Marcos, 20018 Donostia (Gipuzkoa) (ES)
(74) Representative: Evens, Paul Jonathan
(86) International application number: PCT/ES2020/070680
(87) International publication number: WO 2022/096756

(57) **Abstract**

Disclosed is an ultrasound method for measuring the corrosion of a metal structure (1), which comprises: arranging a cloud or matrix of insulated points (2, 3) preset in the metal structure (1); measuring corrosion at only the insulated points (2, 3); and sending the measurement to a base station to estimate the corrosion.

## Description

### Technical field

The present invention is related to systems for measuring corrosion, and more specifically to an ultrasound method to measure and estimate the corrosion in metal structures.

### State of the art

The process of corrosion of metal structures is a matter of concern for good maintenance and health of this type of facility, to prevent deterioration and extend the useful life thereof. This factor becomes more evident if these structures are located at sea far from the shore, as can be the case of offshore wind turbines, oil platforms, boats, etc.

The corrosion process is a random process and it is important to measure the entire structure to detect and prevent or repair localised corrosion. To measure corrosion in this type of structure, ultrasound-based systems are used to monitor large structures.

In this sense, solutions are known in which the ultrasound inspection of the casing of a tank or fuel tank is carried out, or also used in the inspection of wind turbine structures. These solutions for monitoring wall thickness comprise a dry-coupled ultrasound tracker to provide greater efficiency and improved inspection data. The ultrasound tracker is in the form of a vehicle that is magnetically coupled to the outer surface of the structure, being connected at all times, preferably by means of wiring, to a touch panel controller to be managed by an operator. Said tracker performs a continuous scan of the wall of the tank (or other type of structure) to obtain an image of the condition of same in order to calculate the thickness of the wall and detect corrosion problems.

This type of system has the drawback of not being an unsupervised system, always requiring a specialised operator controlling the system. In addition, since it is connected by wiring to the controller, it makes it difficult to use in places that are difficult to access.

Another drawback derived from the need for an operator is that the operator himself has to travel to the structure each time a measurement is desired. This considerably increases the maintenance costs of the structure to be monitored, and does not allow detecting the corrosion rate to analyse and predict in real time the manner in which corrosion is generated. Furthermore, this type of equipment is costly.

There are other more specific systems of a typology similar to those mentioned above, the function of which is aimed at checking the longitudinal weld in wind turbine towers. Tower segments are normally built by rolling a flat plate and welding a longitudinal seam. These individual tapered sections are then welded together with circumferential weld in segments small enough to be transported and connected in the field by means of flange sections. The circumferential weld is a critical weld that must be thoroughly inspected.

In order to inspect this type of weld, the known solutions carry out a circumferential scanner of the longitudinal weld of the structure, with a device continuously scanning the weld, adapting to the shape of the structure to be analysed and which must also be handled by an operator using a controller. These types of solutions that are not carried out completely autonomously are complex and costly.

In view of the described drawbacks or limitations of the currently existing solutions, a method is required that allows the calculation of corrosion to be unsupervised, while reducing the cost of the system used.

### Object of the invention

In order to meet this objective and solve the technical problems discussed so far, in addition to providing additional advantages that can be derived later, the present invention provides an ultrasound method for measuring the corrosion of a metal structure which comprises arranging a cloud or matrix of insulated points preset in the metal structure, measuring corrosion at only the insulated points and sending the measurement to a base station to estimate the corrosion.

Said insulated points will be selected in the structure so that measurement data can be obtained from the structure to estimate the corrosion along the entire length thereof. In this way, a complete scan of the structure to obtain an image of the corrosion in the entire structure is not required as in the known solutions, but with the measurement in discrete points of the structure, the corrosion of the entire length thereof can be estimated. High accuracy is achieved thus minimising errors in the estimation of thickness loss due to corrosion.

Said base station can be located in the same metal structure or in any other place that allows the reception of the measurement data, which will preferably be carried out wirelessly.

According to a feature of the invention, in at least one group of lower insulated points, measuring is done by means of a plurality of fixed sensor nodes permanently arranged in respective lower insulated points, called lower because they correspond to points of difficult access that are normally located in the lower portion of the metal structure, but it can be in any other portion of same.

Due to this configuration, measuring is carried out autonomously and in an unsupervised manner without the need for any operator to have to handle the measurement system. In addition, measuring is obtained in real time without the need for an operator to travel to the measurement location, reducing periodic inspections that entail high costs and allowing to know in advance the state of the structure and, therefore, to be able to better plan mandatory inspections or stops for repairs, etc.

According to another aspect of the invention, in at least one group of upper insulated points, measuring is done by means of at least one mobile sensor node that is arranged in different upper insulated points for measurement, called upper points because they usually correspond to better access points than are normally located in the upper area of the metal structure, but they can be in any other area of the structure. In this way, with said mobile sensor node it is possible to do the measuring at the different insulated points preset in the metal structure, reducing the number of fixed sensor nodes, minimising the use of fixed sensor nodes only for areas of difficult access in which the mobile sensor cannot be moved between the different insulated points and it is required to permanently attach a fixed sensor node. Therefore, the cost of installation and maintenance of the structure is reduced.

Preferably, the measuring method comprises arranging the mobile sensor node integrated into a vehicle for its positioning in the various upper insulated points.

Said vehicle is provided to be a drone, so that this drone will cover the entire accessible area, measuring point by point at each preset insulated point in the structure, with the ability to detect at which points corrosion is occurring and the level of corrosion at said points.

With this solution large structures can be inspected or monitored, the invention being preferably configured for a wind turbine tower and more preferably for an offshore wind turbine tower.

Thus, the lower insulated points where the fixed sensor nodes are located will correspond to the splash area of the wind turbine tower, or even in the floating platform if same is an area of interest.

Additionally, the mobile sensor node will be located by means of the drone in correspondence with insulated points in the atmospheric area of the wind turbine tower, thus covering the entire surface. In this way, the cost of operation and maintenance of offshore wind platforms will be reduced. For this purpose, sensor nodes will be used which carry out the measurement, process same and send it to the base station, preferably using high-bandwidth wireless communications that are capable of sending data with a high degree of reliability in a metal environment such as wind turbine towers, with a high degree of humidity and a hostile environment in which radio signals are also affected and attenuated.

Additionally, preferably, the insulated points are provided to be arranged in the internal surface of the wind turbine tower, so that the fixed sensor nodes are attached to the internal surface of the tower. Consequently, the vehicle or drone carrying the mobile sensor node will preferably be located inside the wind turbine tower in order to position the mobile sensor node at the different insulated points preset in the internal surface of the tower.

In this way, the corrosion of the external face of the structure can be measured from inside the tower. By being inside the structure, it is possible to carry out a continuous measurement, since if it were outside it would not be possible or the data obtained would not be entirely reliable due to atmospheric conditions. This configuration also allows measurements to be made even with the protection layers that are applied to the material of the structure to protect it and delay the onset of corrosion, obtaining more reliable measurements than with known solutions.

According to another aspect, the invention contemplates that at least one of the fixed sensor nodes remains inactive for a preset time interval. That is, the fixed nodes preferably remain in a dormant or inactive state as long as no measurement or information has to be sent, being activated remotely when required or, for example, by means of an RTC (real time clock) according to a set time.

With this, consumption is reduced and autonomy is increased, obtaining a highly optimised design regarding consumption in order to increase its autonomy, which can be established between 3 and 5 years.

### Description of the figures

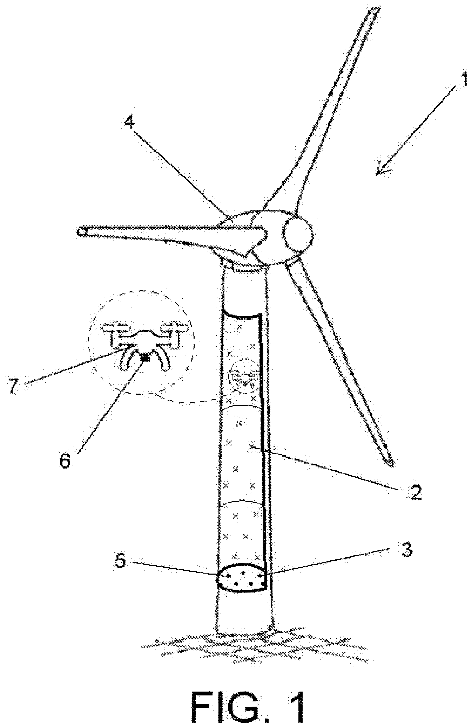

Figure 1 shows a schematic view of a wind turbine tower in which the method for measuring corrosion is carried out. With a cross-section of the tower, where the insulated points of the splash area are indicated inside with dots and the insulated points of the atmospheric area of the wind turbine tower are indicated with an X.

### Detailed description of the invention

The present invention relates to an ultrasound method for measuring the corrosion of a metal structure (1) which comprises arranging a cloud or matrix of insulated points (2, 3) preset in the metal structure (1), measuring corrosion at only the insulated points (2, 3), and sending the measurement to a base station to estimate the corrosion.

Figure 1 corresponds to a non-limiting exemplary practical embodiment of the invention, with variations being possible in the conformation of the method and the system for measuring corrosion without altering its essence.

Said figure 1 shows how in the metal structure (1), in this case a wind turbine tower (1), there are a series of preset points (2, 3) that are previously defined such that the entire extension of the wind turbine tower (1) is covered for the detection of corrosion.

The points (3) marked with a black dot are those that correspond to the splash area of the tower, in other words, points of the structure that are difficult to access and where corrosion occurs to a greater extent due to the area being submerged in the sea or subject to splashing due to waves.

In these lower insulated points (3), a plurality of fixed sensor nodes (5) are attached permanently arranged in respective lower insulated points (3), distributed in the form of a preset matrix that allows corrosion to be measured in each of the preset insulated points (3).

In this area, a fixed solution is chosen because a drone (7) cannot access said area. It may also correspond to the area of the floating platform of the wind turbine tower (1) being also an area of interest to estimate the corrosion.

Thus, the fixed sensor node (5) preferably consists of an ultrasound sensor with a piezoelectric, which is attached to the wind turbine tower (1) by attaching its piezoelectric to the same structure, preferably using adhesive, with its casing in the area where it can best be deployed inside the tower (1).

This fixed sensor node (5) comprises a temperature sensor and wireless communication. The fixed sensor node (5) is preferably based on a microprocessor having a transceiver integrated and a module with a subGHz transceiver connected by external SPI to the microprocessor. Wireless communications will be used as a back-up to UWB communications (ultra-wideband communications), which are the main communications of the system, and also as an alternative to increase robustness depending on the use case and reduce consumption.

The fixed sensor node (5) comprises a transducer that allows the flight time of the ultrasound signal to be measured. So that the fixed sensor node (5) obtains data on the thickness of the tower (1) from the flight time, the temperature measured with the temperature sensor, compensating the thickness measurement based on said temperature, and the time in which said measurement has been done. Said data is sent wirelessly to a base station (4) to estimate the corrosion.

This fixed sensor node (5) can be configured through different types of wireless communications technologies and protocols, or through other means such as a USB or a serial port. This information and configuration can be stored in a memory of the same fixed sensor node (5).

Since the fixed sensor node (5) is going to be arranged permanently attached to the tower (1) to carry out continuous monitoring of the corrosion, said fixed sensor node (5) is preferably powered by a battery of up to 4.2 V. It also has a protection circuit to prevent damage by reversing the polarity of the battery and an interrupter to switch the system on or off. Comprising a system for checking the status of the battery. Thus, it can have an autonomy of up to 5 years, preventing an operator from travelling to the installation as in other known solutions in which an operator is required to carry out the measuring of the corrosion.

Preferably, the fixed sensor node (5) will remain dormant or inactive as long as it does not have to carry out a measurement or send information or a beacon.

The fixed sensor node (5) will carry out a measurement at every time interval that has been configured and for this it will preferably be awakened by an external RTC (real time clock).

This fixed sensor node (5) bases its operation on two modes of operation, the energy-efficient mode and the active mode. In the active mode, the node (5) manages the switching off or switching on of the power sources that supply the devices required to carry out the operations of estimation of corrosion, storage in memory or wireless communications. In energy-efficient mode all devices remain off except the RTC. The transition between both modes is controlled by the clock in real time, according to the time that has been configured for one mode or the other. In this way, consumption is reduced to increase its autonomy.

In order to cover the atmospheric area of the wind turbine tower (1), insulated points (3) are preset as can be seen in Figure 1, marked in the shape of an X, so that the entire tower (1) is covered by a matrix of predetermined points. So that the number of sensors is reduced, thus reducing the cost of the system for measuring the corrosion.

To take the corrosion measurement data at these points, a drone (7) located inside the tower (1) that incorporates a mobile sensor node (6) is provided to move between the different points of the atmospheric area of the tower (1), coupling the mobile sensor node (6) to the corresponding upper insulated point (2). Thus, a single sensor will cover the entire atmospheric area measuring point by point with the ability to detect at which insulated points (2) corrosion is occurring and the level of corrosion at said points (2). The drone (7) being that which decides when to do the measuring.

The drone (7) can set predetermined trajectories covering the upper insulated points (2). Said drone (7) is positioned at the point (2) to be measured and couples the mobile sensor node (6) to the tower (1), preferably injecting a couplant gel, so that only the piezoelectric of the mobile sensor node (6) touches the tower (1) through the gel. The drone (7) gives the order to the mobile sensor for the measurement and the mobile sensor node (6) sends said measurement to the base station (4) indicating the position that has been measured, and then the drone cleans the area and moves to another upper insulated point (2) repeating the same operation.

Said mobile sensor node (6) preferably consists of a piezoelectric ultrasound sensor that is mounted on the drone (7) to be coupled to the tower (1) using gel. It has a temperature sensor and wireless communication as well as the fixed sensor node (5).

The communications interface between the mobile sensor node (6) and the drone (7) is preferably a UART (Universal Asynchronous Receiver-Transmitter).

The mobile sensor node (6) can be configured through different types of wireless communications technologies and protocols, or through other means such as a USB or a serial port. This information and configuration can be stored in a memory of the same mobile sensor node (6).

This mobile sensor node (6) is powered by the main battery of the drone (7).

Both sensor nodes (5, 6) are provided to comprise the same PCB design that includes the hardware required for both nodes (5, 6), with the only difference being communication with the drone and power supply, as well as being able to use different piezoelectric.

Thus, all the measurements carried out by the sensor nodes (5, 6) deployed in the two areas to be monitored will be sent wirelessly to the base station (4) which is preferably located in the same tower (1).

Said base station will synchronise the fixed sensor nodes (5) through wireless communication so that each one sends the measurement in a different time slot.

In this way, all the measurement data obtained are managed and an estimate of the corrosion of the tower (1) is carried out, a real-time measurement being obtained that allows continuous monitoring of the corrosion for its prevention or maintenance, preventing handling by an operator and thus reducing the cost of both the system and the maintenance of the tower (1).

## Claims

1. An ultrasound method for measuring the corrosion of a metal structure (1) **characterised in that** it comprises: arranging a cloud or matrix of insulated points (2, 3) preset in the metal structure; measuring corrosion at only the insulated points (2, 3); and sending the measurement to a base station (4) to estimate the corrosion.

2. The method for measuring the corrosion according to the preceding claim, **characterised in that** in at least one group of lower insulated points (3) measuring is done by means of a plurality of fixed sensor nodes (5) permanently arranged in respective lower insulated points (3).

3. The method for measuring the corrosion according to the preceding claim, **characterised in that** in at least one group of upper insulated points (2) measuring is done by means of at least one mobile sensor node (6) that is arranged at different upper insulated points (2) for measuring.

4. The method for measuring the corrosion according to the preceding claim, **characterised in that** the mobile sensor node (6) is arranged integrated into a vehicle (7) for its positioning in the different upper insulated points (2).

5. The method for measuring the corrosion according to preceding claims, **characterised in that** the metal structure (1) is a wind turbine tower.

6. The method for measuring the corrosion according to the preceding claim, **characterised in that** the insulated points (2, 3) are arranged in the internal surface of the wind turbine tower (1).

7. The method for measuring the corrosion according to the preceding claim, **characterised in that** the vehicle (7) is arranged inside the wind turbine tower (1).

8. The method for measuring the corrosion according to claim 4, **characterised in that** at least one of the fixed sensor nodes (5) remains inactive for a predetermined time interval.
